# EUROPEAN PATENT APPLICATION

(11) **EP 4 071 963 A1**
(43) Date of publication of application: **12.10.2022**
(21) Application number: 22166940.1
(22) Date of filing: 06.04.2022
(51) Int. Cl.: H02J 7/00

(54) **BATTERY ARRAY HAVING A POWER AND DATA MESH ARCHITECTURE**

(30) Priority: 07.04.2021 US 202163171736 P
(71) Applicant: The Boeing Company, Chicago, IL 60606-2016 (US)
(72) Inventor: HALLMARK, Dean Sherwin, Chicago, 60606-2016 (US); JOHNSON, Patrick Walton, Chicago, 60606-2016 (US); COMPTON, Charles Tracy, Chicago, 60606-2016 (US); BODEN, Arron, Chicago, 60606-2016 (US)
(74) Representative: Boult Wade Tennant LLP

(57) **Abstract**

A battery array comprising a plurality of battery modules each having one or more battery cells. The battery array comprises a plurality of switching elements configured to switch the one or more battery cells in circuit and out of circuit with the battery array, and a memory storing a connection map indicating an identifier associated with each of the plurality of battery modules, a location of one or more electrical outputs of the battery array, and interconnections between each of the plurality of battery modules. The battery array also comprises a module management unit coupled to the memory that controls the plurality of switching elements. The module management unit is in electronic communication with remaining battery modules of the battery array based on a data mesh architecture.

## Description

### INTRODUCTION

The subject disclosure relates to a battery array having a power and data mesh architecture. More particularly, the subject disclosure is directed towards a battery array comprising a plurality of battery modules in electronic communication with one another based on a data mesh architecture, where interconnections between the battery modules are reconfigurable.

### BACKGROUND

A battery system comprises an array of rechargeable battery modules managed by a battery management system. The battery management system is responsible for performing functions such as, for example, preventing each battery module from over-charging or over-discharging, monitoring a state-of-charge of each battery module, determining if one or more battery modules need replacement, balancing the state-of-charge of each battery module, and thermal management. The battery modules are electrically connected to one another in series and parallel to create a battery system. Data may be exchanged within the battery system using one of two different network architectures, namely, a centralized architecture and a distributed architecture. The typical centralized architecture employs a single controller, which is referred to as a battery management unit (BMU), to provide control to all of the individual batteries that are part of the battery array. In contrast, the distributed architecture comprises of a plurality of module management units (MMU) that each correspond to one of the individual batteries that are part of the battery array and a battery management unit that communicates with the MMUSs. When using the distributed architecture, the battery management unit may act as a primary controller, and the module management units act as secondary controllers, or the MMUs may collectively assume and share battery management function.

Battery systems are employed in a wide variety of applications. For example, a battery system may be used to provide electric power to loads located in remote or far-off locations. However, many battery systems and their associated controllers presently available are usually too heavy to be carried by hand to remote locations. Furthermore, in some situations, standardized pallets that include specific dimensions are used for handling and transporting equipment to remote locations. For example, the army may use a North Atlantic Treaty Organization (NATO) standardized pallet. However, many battery systems presently available are too large to fit within the standardized pallets.

### SUMMARY

According to several aspects, a battery array comprising a plurality of battery modules each having one or more battery cells is disclosed. Each battery module comprises a plurality of switching elements configured to switch the one or more battery cells in circuit and out of circuit with the battery array. Each battery module also comprises a memory storing a connection map indicating an identifier associated with each of the plurality of battery modules, a location of one or more electrical outputs of the battery array, and interconnections between each of the plurality of battery modules. Each battery module also comprises a module management unit coupled to the memory that controls the plurality of switching elements. The module management unit is in electronic communication with remaining battery modules of the battery array based on a data mesh configuration, the module management unit executing instructions to receive system requirement data for each of the one or more electrical outputs of the battery array, where the system requirement data indicates a required voltage, a required current, and a required capacity corresponding to each of the one or more electrical outputs. In response to receiving the system requirement data, the module management unit calculates an interconnection plan that indicates selected interconnections between the plurality of battery modules for meeting the system requirement data for at least one of the electrical outputs. The module management unit instructs the plurality of switching elements to switch the one or more battery cells either in circuit or out of circuit with the battery array based on the interconnection plan.

In another aspect, a method of operating a battery array having a plurality of battery modules is disclosed. The method comprises receiving, by a module management unit, system requirement data indicating a required voltage, a required current, and a required capacity corresponding to one or more electrical outputs of the battery array. Each battery module of the battery array comprises a corresponding module management unit and one or more battery cells. In response to receiving the system requirement data, the method comprises calculating an interconnection plan that indicates selected interconnections between the plurality of battery modules for meeting the system requirement data for at least one of the electrical outputs. A memory of the module management unit stores a connection map indicating an identifier associated with each of the plurality of battery modules, a location of one or more electrical outputs of the battery array, and interconnections between each of the plurality of battery modules. Finally, the method comprises instructing, by the module management unit, a plurality of switching elements to switch the one or more battery cells either in circuit or out of circuit with the battery array based on the interconnection plan. The module management unit is in electronic communication with remaining battery modules of the battery array based on a data mesh configuration.

The features, functions, and advantages that have been discussed may be achieved independently in various examples or may be combined in other examples further details of which can be seen with reference to the following description and drawings.

### BRIEF DESCRIPTION OF THE DRAWINGS

The drawings described herein are for illustration purposes only and are not intended to limit the scope of the subject disclosure in any way.
FIG. 1 is a schematic diagram illustrating one example of the disclosed battery system, where the battery system comprises of a battery array having a plurality of battery modules;
FIG. 2 is an alternative example of the battery array shown in FIG. 1 where the battery array is three-dimensional;
FIG. 3 is a schematic diagram of one of the battery modules comprising one or more battery cells, a plurality of switches, and a module management unit;
FIG. 4 illustrates a process flow diagram illustrating a method of operating the disclosed battery array;
FIGS. 5A-5B illustrate a process flow diagram illustrating a method of calculating an interconnection plan;
FIG. 6 is an illustration of the battery array shown in FIG. 1, where selected interconnections between the battery modules are established;
FIG. 7A is a diagram illustrating one example of the battery array before one of the battery modules become non-functional;
FIG. 7B is the diagram shown in FIG. 7A, after one of the battery modules becomes non-functional;
FIG. 8A is a diagram illustrating the battery modules electrically connected to one another based on the interconnection plan;
FIG. 8B is a diagram illustrating the battery modules shown in FIG. 8A now electrically connected to one another based on a standby interconnection plan;
FIG. 9 is a diagram illustrating a plurality of sub-arrays of battery modules in electronic communication with one another based on a data mesh architecture; and
FIG. 10 is a computer system for implementing the module management unit.

### DETAILED DESCRIPTION

The subject disclosure is directed towards a battery array employing a power and data mesh architecture for exchanging data between battery modules. The battery array comprises a plurality of battery modules that are electrically connected to one another by a matrix switch. The matrix switch interconnects the battery modules in either series or parallel based on the specific requirements of the battery array. The battery system also comprises one or more electrical outputs. Each battery module comprises one or more battery cells, a plurality of switches for switching the battery cells in and out of circuit with the battery array, and a module management unit. The battery system employs a data mesh architecture for exchanging data between the respective module management units of each battery module that is part of the battery array. Accordingly, the battery modules that are part of the battery array communicate with one another to determine the most efficient interconnections in either series or parallel for satisfying the electrical power requirements. Specifically, the module management units communicate with one another over the mesh data architecture to collectively determine an interconnection plan between the battery modules. The interconnection plan indicates selected interconnections in either series or parallel between the plurality of battery modules. When the battery modules are electrically connected to one another according to the interconnection plan, the battery array produces the electrical power required by at least one of the electrical outputs of the battery system.

It is to be appreciated that the disclosed the battery system reconfigures the electrical connections between the battery modules based on electronic switching, without the need to physically move or change interconnections between the battery modules. Accordingly, when events such as modifying the output requirement for one or more of the electrical outputs or changes to the system status such as failure of one or more of the battery modules occur, the battery system seamlessly reconfigures the interconnections between the battery modules. Moreover, as the battery modules deplete during operation, the electrical interconnections between the battery modules are dynamically adjusted. Accordingly, it is to be appreciated that the interconnections between the battery modules are reconfigurable to produce the electrical power required by at least one of the electrical outputs of battery system, even when one or more battery modules are depleted. The battery modules are modular and may be arranged into a variety of configurations as well.

The following description is merely exemplary in nature and is not intended to limit the subject disclosure, application, or uses.

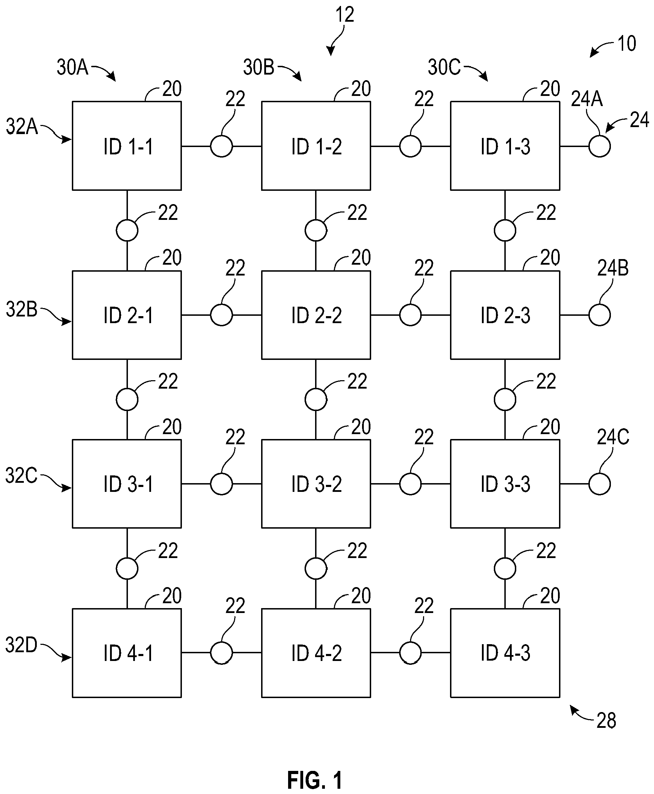

Referring to FIG. 1, a schematic diagram of a battery system 10 comprising a battery array 12 having a plurality of battery modules 20. Each battery module 20 of the battery array 12 is electrically connected in either series or parallel to at least one of the remaining battery modules 20 that are part of the battery array 12 by an interconnection 22. The battery system 10 comprises one or more electrical outputs 24 that are electrically connected to one of the battery modules 20. Each electrical output 24 transmits electrical power generated by the battery array 12 to a corresponding load (not shown). In some examples, including the non-limiting example as shown in FIG. 1, the battery array 12 is a 3x4 two-dimensional battery array 12 comprising of twelve battery modules 20 and three electrical outputs 24. However, it is to be appreciated that FIG. 1 is merely exemplary in nature and the battery array 12 may comprise any number of battery modules 20 and any number of electrical outputs 24 arranged in any number of configurations.

As explained below, the battery system 10 reconfigures the interconnections 22 between the battery modules 20 that are part of the battery array 12 based on electronic switching, without the need to physically manipulate or handle the interconnections 22 between the battery modules 20. As also explained below, the disclosed battery system 10 exchanges data between the battery modules 20 based on a data mesh architecture. Thus, the disclosed battery system 10 exchanges data between the battery modules 20 based on a peer-to-peer relationship instead of a centralized approach.

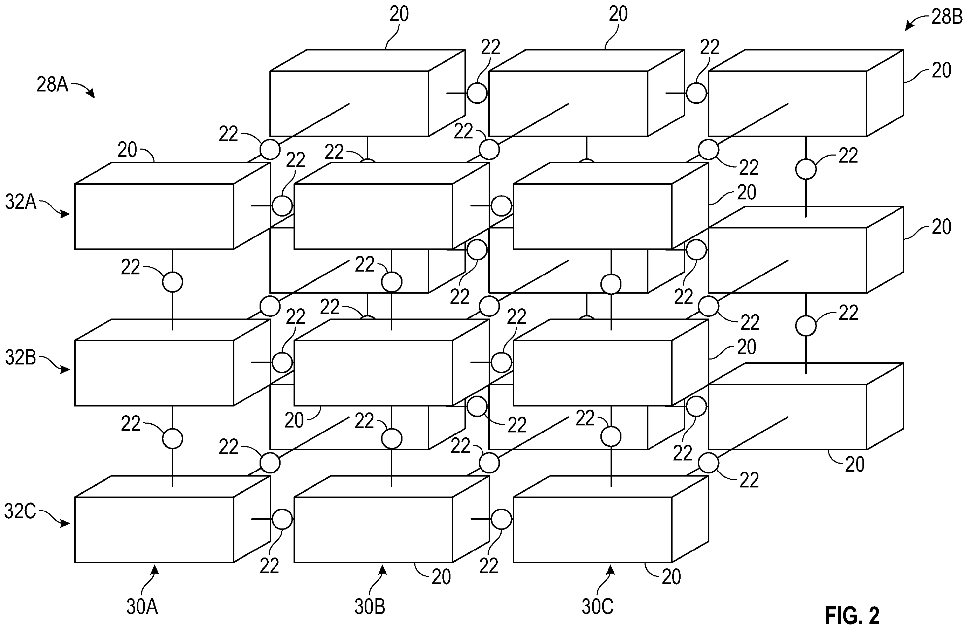

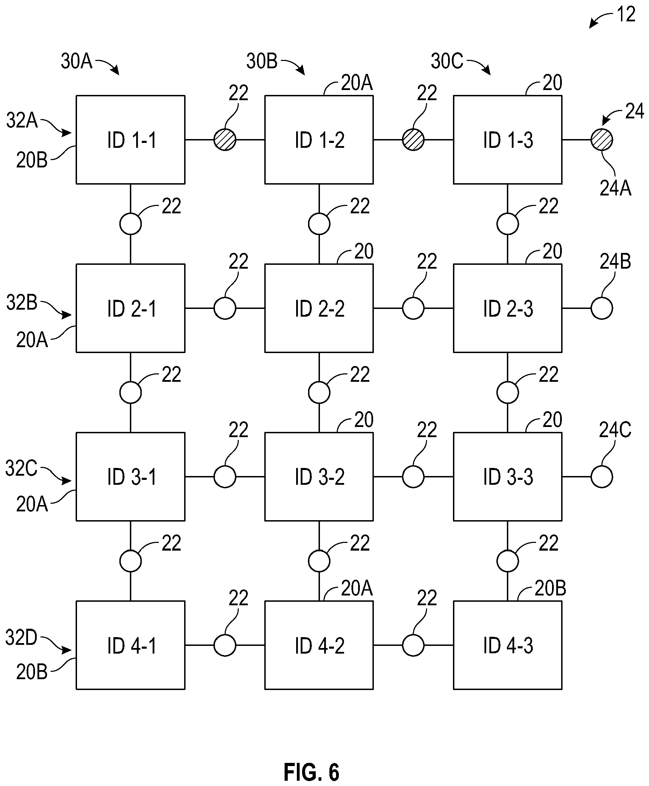

The battery modules 20 are secondary or rechargeable batteries. In some examples, including the example as shown in FIG. 1, the battery array 12 is two-dimensional array having battery modules 20 arranged in a single face 28 into a plurality of columns 30A, 30B, 30C and a plurality of rows 32A, 32B, 32C, 32D. For example, in some examples, including the example as shown in FIG. 1, the battery modules 20 are arranged into three columns 30A-30C and four rows 32A-32D. Alternatively, some examples, including the example shown in FIG. 2, the battery array 12 is a three-dimensional array having battery modules arranged in two different faces 28A and 28B. Specifically, as seen in FIG. 2, a front face 28A comprises nine battery modules 20 arranged in a 3x3 array, and a rear face 28B comprises nine battery modules 20 arranged in a 3x3 array. Referring to FIGS. 1 and 6, the interconnections 22 are activated to electrically connect the battery modules 20 to one another based on a series or parallel configuration, where an activated interconnection 22 is shaded (the activated interconnections 22 are seen in FIG. 6).

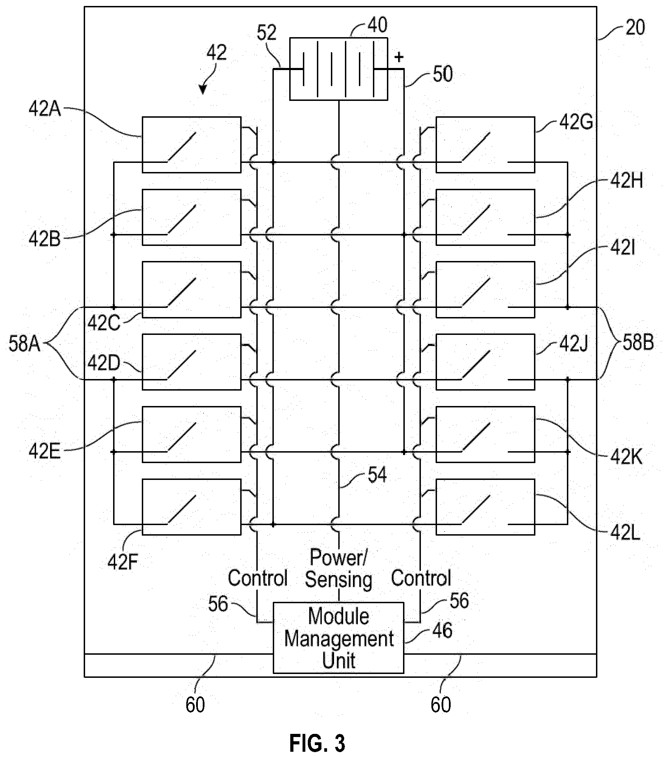

Referring to FIG. 3, each battery module 20 comprises one or more battery cells 40, a plurality of switching elements 42, and a module management unit 46. The one or more battery cells 40 generate electrical power that is transmitted to the one or more electrical outputs 24 of the battery array 12 (seen in FIG. 1). The one or more switching elements 42 are electrically connected to either a positive terminal 50 or a negative terminal 52 of the one or more battery cells 40. In some examples, the one or more switching elements 42 are solid state power switches (SSPSs) configured to switch the one or more battery cells 40 in circuit and out of circuit with the battery array 12 (FIG. 1).

In some examples, including the example shown in FIG. 3, the battery module 20 comprises of twelve individual switching elements 42A-42L. The plurality of switching elements 42A-42L are configured to connect the one or more battery cells 40 in circuit with the battery array 12 based on one of two opposing polarities. Specifically, when the switching elements 42A, 42G, 42E, and 42K are switched to an ON position, the one or more battery cells 40 are in circuit with the battery array 12 (FIG. 1) with a first polarity, and when switching elements 42F, 42L, 42B, and 42H are switched to the ON position, then the one or more battery cells 40 are in circuit with the battery array 12 with a second polarity, where the first polarity is opposite to the second polarity. In addition to connecting the one or more battery cells 40 in circuit based on one of two opposing polarities, the plurality of switching elements 42 are configured to pass electrical power through the corresponding battery module 20 as well, where the electrical power is generated by the remaining battery modules 20 of the battery array 12. For example, in some examples, including the example shown in FIG. 3, the battery module 20 comprises terminals 58A, 58B that are connected to the switching elements 42C, 42D, 421, and 42J. When the switching elements 42C, 42D, 421, and 42J are switched to the ON position, electrical power generated by the remaining battery modules 20 is transmitted between the terminals 58A, 58B of the corresponding battery module 20 to the one or more electrical outputs 24 of the battery array 12. It is to be appreciated that the switching configuration illustrated in FIG. 3 is merely exemplary in nature, and any number of switching configurations may be used based on the specific configuration and requirements of the battery module 20.

The module management unit 46 is electrically coupled to the one or more one or more battery cells 40 by a power/sensing line 54 and to the plurality of switching elements 42 by control lines 56. Referring to FIGS. 1 and 3, the module management unit 46 is also in electronic communication with the other module management units 46 of the remaining battery modules 20 of the battery array 12 by a data connection 60 based on the data mesh architecture. It is to be appreciated that each of the battery modules 20 that are part of the battery array 12 are in electronic communication with one another based on a data mesh architecture. The data mesh architecture is a decentralized approach for exchanging data between each module management unit 46 of the battery array 12. The data connections 60 between the module management units 46 of the battery array 12 may be wireless or wired.

It is to be appreciated that the data mesh architecture ensures that all of the battery modules 20 that are part of the battery array 12 are in electronic communication with one another. Accordingly, it follows that each module management unit 46 that is part of the battery array 12 receives data regarding the remaining battery modules 20 that are part of the battery array 12. As explained below, the module management units 46 of the battery array 12 self-configure to achieve system goals. Specifically, the battery array 12 self-configures to achieve system requirement data indicating a defined or required voltage, a required current, and a required capacity corresponding to each of the one or more electrical outputs 24 of the battery array 12. It is to be appreciated that the system goals may be instantiated a priori by each of the module management units 46 of the battery array 12 or, alternatively, may be communicated to the battery array 12 by an outside source.

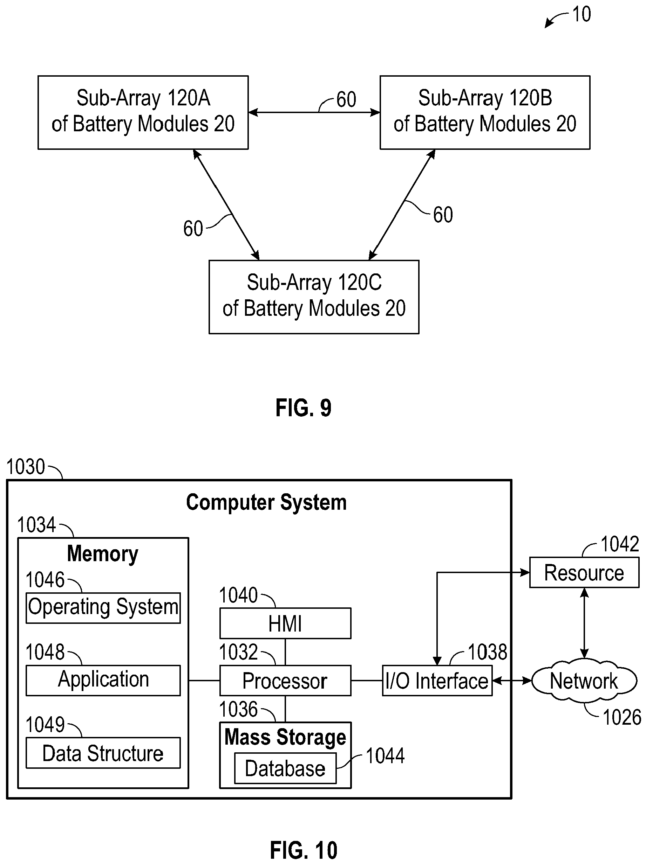

The module management unit 46 also comprises a memory 1036 (shown in FIG. 10). The memory 1036 stores a connection map indicating an identifier associated with each of the plurality of battery modules 20 that are part of the battery array 12, a location of the one or more electrical outputs 24 of the battery array 12, and the interconnections 22 between each of the plurality of battery modules. For example, as seen in the example in FIG. 1, the battery module 20 located in column 30A and row 32A includes the identifier ID 1-1, which indicates that the battery module 20 is located in the first row and the first column of the battery array 12. As seen in FIG. 1, there are twelve unique identifiers that are provided for each of the battery modules 20. Furthermore, the connection map indicates that a first electrical output 24A is connected to the battery module 20 having the identifier ID 1-3, a second electrical output 24B is connected to the battery module 20 having the identifier ID 2-3, and a third output 24C is connected to the battery module 20 having the identifier ID 3-3. It is to be appreciated that the electrical outputs 24 are each assigned a priority. In some examples, the first electrical output 24A has the highest priority, followed by the second electrical output 24B, and the third electrical output 24C has the lowest priority.

Continuing to refer to FIGS. 1 and 3, the module management unit 46 receives data indicating a plurality of operating parameters from the other battery modules 20 that are part of the battery array 12 through the data connection 60. The plurality of operating parameters comprises a rated voltage, a battery capacity, a state-of-charge, a state-of-health, available series and parallel connections, and fault data for a corresponding one of the battery modules 20 that are part of the battery array 12. The state-of-health data indicates if the corresponding battery module 20 is sufficiently healthy to be used to provide the required voltage, the required current, and the required capacity. The fault data indicates if the corresponding battery module 20 is experiencing one or more fault conditions. Some examples of fault conditions that the battery modules 20 may experience include, but are not limited to, overtemperature, undertemperature, overvoltage, undervoltage, and overcurrent.

Referring to FIGS. 1 and 3, the module management unit 46 receives the system requirement data for each of the one or more electrical outputs 24 of the battery array 12. In response to receiving the system requirement data, the module management unit 46 calculates an interconnection plan that indicates selected interconnections 22 between the plurality of battery modules 20 for meeting the system requirement data for at least one of the electrical outputs 24. The calculation of the interconnection plan is described in greater detail below. Once the interconnection plan is established, the module management unit 46 instructs the plurality of switching elements 42 to switch the one or more battery cells 40 either in circuit or out of circuit with the battery array 12 based on the interconnection plan.

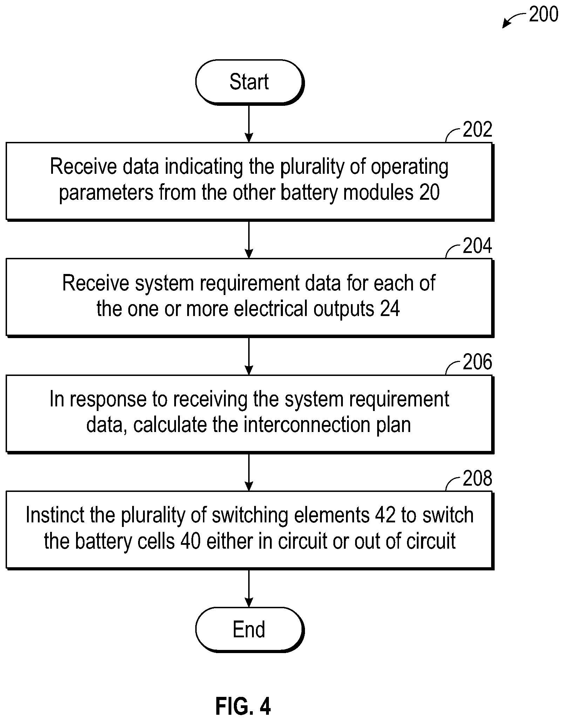

FIG. 4 is a process flow diagram illustrating a method 200 for operating the battery array 12 shown in FIG. 1. Referring to FIGS. 1, 3, and 4, the method 200 begins at block 202. In block 202, the module management unit 46 receives data indicating the plurality of operating parameters from the other battery modules 20 that are part of the battery array 12 through the data connection 60. As mentioned above, the plurality of operating parameters comprises the rated voltage, the battery capacity, the state-of-charge, the state-of-health, the available series and parallel connections, and the fault data for the corresponding one of the battery module 20 that are part of the battery array 12. The method 200 proceeds to block 204.

In block 204, the module management unit 46 receives system requirement data for each of the one or more electrical outputs 24 of the battery array 12. As mentioned above, the system requirement data indicates the required voltage, the required current, and the required capacity corresponding to each of the one or more electrical outputs 24. The method 200 proceeds to block 206.

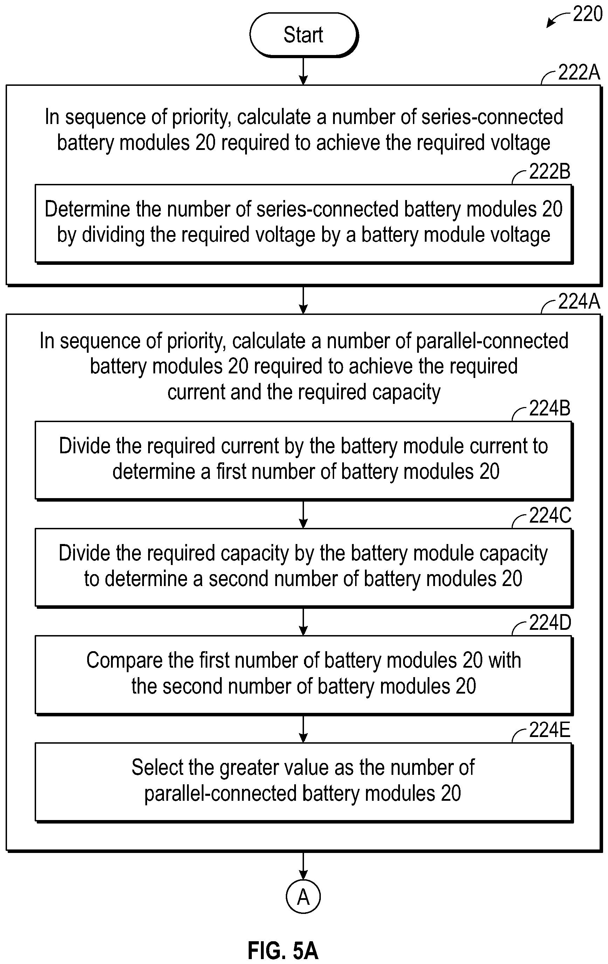

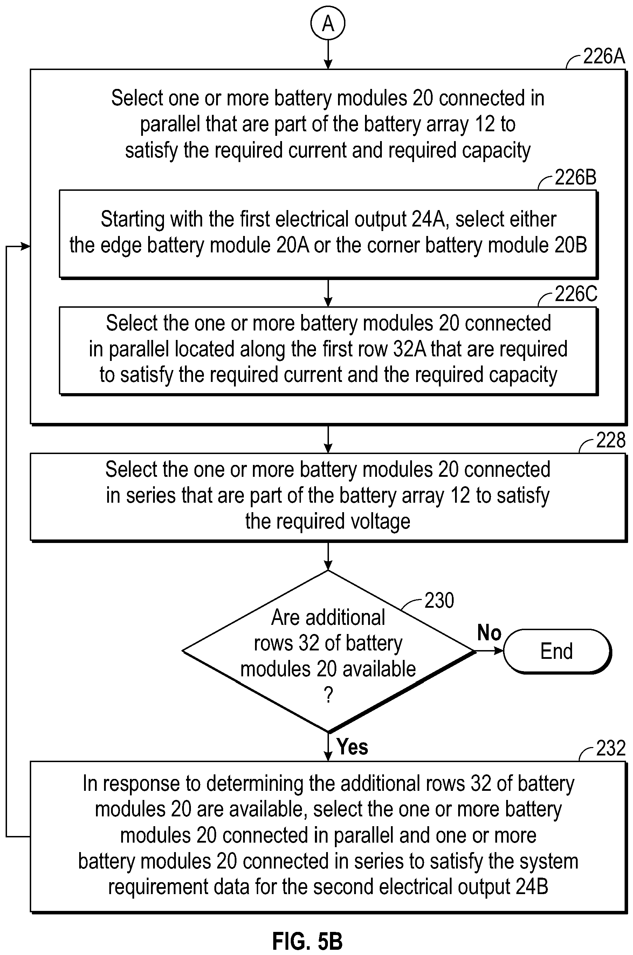

In block 206, in response to receiving the system requirement data, the module management unit 46 calculates the interconnection plan that indicates the selected interconnections 22 between the plurality of battery modules 20 for meeting the system requirement data for at least one of the electrical outputs 24. It is to be appreciated that the mesh data architecture allows for data to be exchanged between the various module management units 46 of the battery array 12, and that the module management unit 46 collectively determine the interconnection plan. The calculation of the system requirement plan is described in greater detail below and illustrated in FIGS. 5A-5B. The method 200 proceeds to block 208.

In block 208, the module management unit 46 instructs the plurality of switching elements 42 to switch the one or more battery cells 40 either in circuit or out of circuit with the battery array 12 based on the interconnection plan. The method 200 then terminates.

Referring now to FIGS. 5A-5B, a process flow diagram illustrating an exemplary method 220 for determining the interconnection plan is described. Referring to FIGS. 1, 3, and 5A, the method 220 begins at block 222A. In block 222A, in sequence of priority, the module management unit 46 calculates a number of series-connected battery modules 20 required to achieve the required voltage indicated by the system requirement data for each of the electrical outputs 24. Specifically, as seen in block 222B, the module management unit 46 determines the number of series-connected battery modules 20 by dividing the required voltage by a battery module voltage.

The battery module voltage represents a voltage of the battery modules 20 that are part of the battery array 12. In this and other examples, the battery module voltage between each of the battery modules 20 is equal or about equal. That is, each of the battery modules 20 that are part of the battery array 12 have the same or about the same battery module voltage. Moreover, each of the battery modules 20 also comprise the same or about the same electric charge. As a result, each of the battery modules 20 comprise the same battery module capacity (or about the same battery module capacity) and the same battery module current (or about the same battery module current). It is also to be appreciated that soft-start circuitry may be used to prevent voltage and current surge if one or more of the battery modules 20 that are part of the battery array 12 are depleted.

In this and other examples, the first electrical output 24A has the highest priority, followed by the second electrical output 24B, and the third electrical output 24C has the lowest priority. Furthermore, each of the battery modules 20 include a voltage of 3.5 volts (or about 3.5 volts) and an electric charge of 3 ampere-hour units (or about 3 ampere-hour units). In this and other examples, a first electrical output 24A requires 10.5 volts, 3 ampere-hours (or about 10.5 volts, 3 ampere-hours); a second electrical output 24B requires 7.0 volts, 3 ampere-hour units (or about 7.0 volts, 3 ampere-hour units); and a third output 24C requires 10.5 volts, 6 ampere hours (or about 10.5 volts, 6 ampere hours). Accordingly, in this and other examples, the module management unit 46 divides the required voltage of 10.5 volts with the battery module voltage 3.5, which results in three. Thus, three battery modules 20 are connected in series to achieve the voltage required by the first electrical output 24A. Similarly, two battery modules 20 are connected in series to achieve the voltage required by the second electrical output 24B, and three battery modules 20 are connected in series to achieve the voltage required by the third output 24C. The method 220 then proceeds to block 224A.

In block 224A, in sequence of priority, the module management unit 46 calculates a number of parallel-connected battery modules 20 that are required to achieve the required current and the required capacity indicated by the system requirement data for each of the electrical outputs 24. Specifically, the module management unit 46 determines the number of parallel-connected battery modules by following blocks 224B-224E. In block 224B, the module management unit 46 divides the required current by the battery module current to determine a first number of battery modules 20. Then, in block 224C, the module management unit 46 divides the required capacity by a battery module capacity to determine a second number of battery modules 20. In block 224D, the module management unit 46 compares the first number of battery modules 20 with the second number of battery modules 20 to determine a greater value between the first number of battery modules 20 and the second number of battery modules 20. In block 224E, the module management unit 46 selects the greater value as the number of parallel-connected battery modules 20. The method 200 proceeds to block 226A.

In block 226A, the module management unit 46 selects one or more battery modules 20 connected in parallel that are part of the battery array 12 to satisfy the required capacity and the required current for a first electrical output 24A, where the number of parallel-connected battery modules are selected. FIG. 6 is an illustration of the battery array 12 shown in FIG. 1, where activated interconnections 22 between the battery modules 20 are shown as shaded. As seen in FIG. 6, the battery modules 20 of the battery array 12 are arranged into the plurality of columns 30A-30C and the plurality of rows 32A-32C. An edge battery module 20A, corner battery module 20B, or both an edge battery module 20 and a corner battery module 20B exist for each row 32 of the plurality of rows 32 of the battery array 12. In this and other examples, an edge battery module 20A is interconnected to three other battery modules 20 and the corner battery module 20B is interconnected to two battery modules 20. For example, in some examples, including the example shown in FIG. 6, the battery modules 20 having identifiers ID 1-2, ID 2-1, ID 3-1, and ID 4-2 are the edge battery modules 20A, and the battery modules 20 having identifiers ID 1-1, ID 4-1, and ID 4-3 are corner modules 20B. It is to be appreciated that the edge batteries 20A and the corner batteries 20B are not connected to one of the electrical outputs 24.

Referring to block 226B, starting with the first electrical output 24A, the module management unit 46 selects either the edge battery module 20A or the corner battery module 20B for the first row 32A that the first electrical output 24A is located along. For example, as shown in FIG. 6, the corner battery module 20B having ID 1-1 is selected. In block 226C, the module management unit 46 selects one or more battery modules 20 connected in parallel located along the first row 32A that are required to satisfy the required current and the required capacity of the first electrical output 24A. In some examples, including the example shown in FIG. 6, none of the battery modules 20 are connected in parallel to satisfy the required current and required capacity of the first electrical output 24A. The method 200 proceeds to block 228.

In block 228, after selecting the one or more battery modules 20 connected in parallel, the module management unit 46 selects one or more battery modules 20 connected in series that are part of the battery array 12 to satisfy the required voltage for the first electrical output 24A, where the number of series-connected battery modules 20 are selected. For example, as shown in FIG. 6, the module management unit 46 selects the three battery modules 20, ID 1-1, ID 1-2, and ID 1-3 connected in series to achieve the voltage required by the first electrical output 24A. Accordingly, the interconnections 22 located between the battery modules 20 having identifiers ID 1-1, ID 1-2, and ID 1-3 are shaded to show the activated interconnections 22. The method 200 then proceeds to decision block 230.

In decision block 230, after selecting the one or more battery modules 20 connected in parallel and the one or more battery modules 20 connected in series to satisfy the system requirement data for the first electrical output 24A, the module management unit 46 determines if additional rows of battery modules 20 are available within the battery array 12. If no additional rows 32 are available, then the method 200 terminates. However, if additional rows 32 of battery modules 20 are available, then the method proceeds to block 232.

In block 232, in response to determining the additional rows 32 of battery modules 20 are available within the battery array 12, then the module management unit 46 selects one or more battery modules 20 connected in parallel and one or more battery modules 20 connected in series to satisfy the system requirement data for the second electrical output 24B, and returns to block 226A. In some examples, including the example as shown in FIG. 6, three rows 32B, 32C, 32D, and 32E are available within the battery array 12. Accordingly, the module management unit 46 determines the interconnections 22 required to satisfy the system requirement data for the second electrical output 24B. It is to be appreciated that in this and other examples, the module management unit 46 also determines the interconnections 22 to satisfy the system requirement data for the third electrical output 24C.

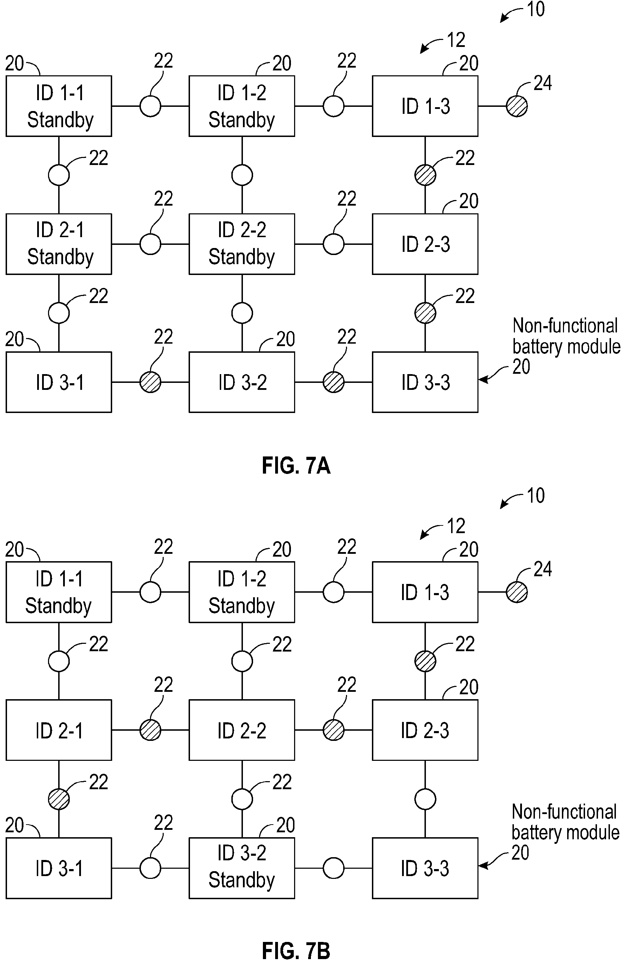

Referring to FIGS. 7A and 7B, in some examples the data mesh architecture allows for the battery system 10 to react if to one or more of the battery modules 20 are non-functional. When a battery module 20 becomes non-functional, the battery module 20 is no longer able to provide the required voltage, the required current, and the required capacity when switched in circuit with the battery array 12. FIG. 7A is an illustration of the battery array 12 before one of the battery modules 20 becomes non-functional, and FIG. 7B is an illustration of the battery array 12 after the battery module 20 malfunctions and the battery system 10 reacts. In some examples, including the example shown in FIG. 7A-7B, the battery module 20 having the identifier 3-3 is a non-functional battery module 20. Referring to FIGS. 3 and 7A-7B, the module management unit 46 of the non-functional battery module 20 generates a notification indicating the battery module 20 having the identifier ID 3-3 is non-functional. The remaining battery modules 20 then receive the notification indicating a presence of a non-functional battery module 20.

As seen in FIG. 7A, before sending the notification, the non-functional battery module 20 having the identifier ID 3-3 is switched in circuit with the battery array 12 as part of the interconnection plan. In response to receiving the notification, the module management unit 46 (FIG. 3) corresponding to each of the battery modules 20 that are part of the battery array 12 calculates an alternate interconnection plan without the non-functional battery module 20 (i.e., without the battery module 20 having the identifier ID 3-3). The battery modules 20 then re-configure into the alternate interconnection plan. It is to be appreciated that the alternate interconnection plan comprises at least one standby battery module 20, which services as a back-up battery module 20 in the event one or more battery modules 20 become unavailable. In some examples, including the example shown in FIG. 7A, the interconnection plan comprises the battery modules 20 having identifiers ID 1-3, 2-3, 3-3, 3-2, and 3-1 electrically connected to one another in series, and the remaining four battery modules 20 are standby battery modules 20 that are not interconnected to any of the other battery modules 20.

Referring to FIG. 7B, once the non-functional battery module 20 sends the notification the battery system 10 reconfigures into the alternative interconnection plan. The alternative interconnection plan comprises the battery modules 20 having identifiers ID 1-3, ID 2-3, ID 2-2, ID 2-1, and ID 3-1 connected to another in series. Specifically, the standby battery modules 20 having identifiers ID 2-1 and ID 2-2 are now switched in circuit with the battery array 12, and the battery modules 20 having identifiers ID 1-1, 1-2, and 3-2 are standby battery modules 20. Furthermore, in some examples, including the example shown in FIG. 7B, the non-functional battery module 20 having identifier ID 3-3 is not switched in circuit with the battery array 12.

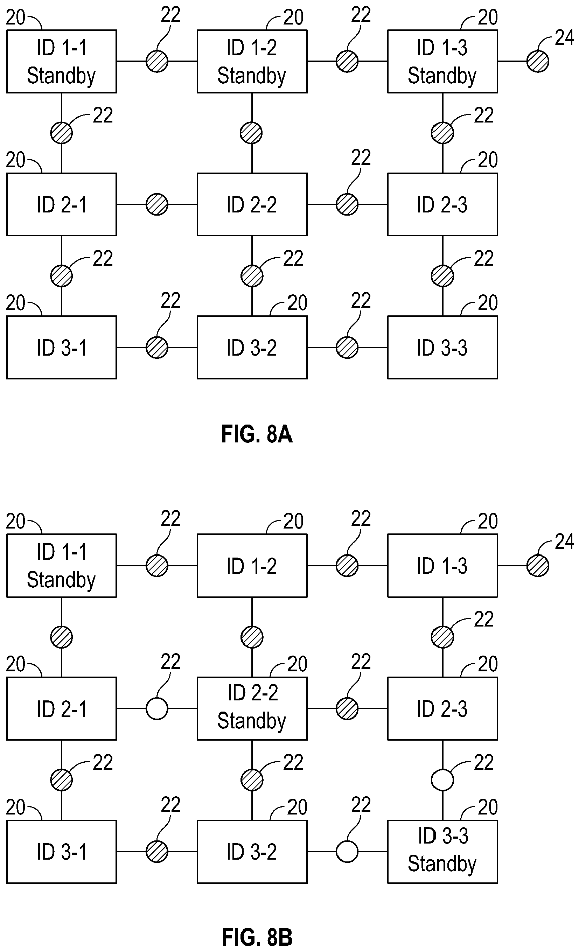

As seen in FIG. 7A and 7B, the interconnection plan may utilize some battery modules 20 more than others, while some battery modules 20 are completely unused. For example, as shown in FIGS. 7A-7B, the battery module 20 having identifier 1-1 is unused. In still other examples, the data mesh architecture may take advantage of the available electrical energy produced by the battery array 12 by cycling unused battery modules 20 in and out of the interconnection plan. In this manner, the battery modules 20 that are part of the battery array 12 are depleted more evenly. In some examples, including the example shown in FIG. 8A, the interconnection plan includes three of the battery modules 20 interconnected in parallel and two of the battery modules 20 interconnected to one another in series, and the remaining battery modules 20 are standby modules 20. Specifically, in some examples, including the example shown in FIG. 8A, the battery modules 20 having identifiers ID 2-1, ID 2-2, ID 2-3, ID 3-1, ID 3-2, and ID 3-3 are interconnected to one another, and the battery modules 20 having identifiers ID 1-1, ID 1-2, and ID 1-3 are standby battery modules 20.

The module management unit 46 determines that at least one standby battery module 20 exists as part of the interconnection plan, where the standby battery module 20 represents an unused battery module 20 that is not interconnected 22. In response to determining at least one standby battery module 20 exists as part of the interconnection plan, the module management unit 46 calculates a standby interconnection plan. The standby interconnection plan employs at least one of the standby battery modules 20 shown in FIG. 8A. The standby interconnection plan is shown in FIG. 8B. As seen in FIG. 8B, the battery modules 20 having identifiers ID 2-1, ID 3-1, ID 1-2, ID 3-2, ID 1-3, and ID 2-3 are interconnected to one another, and the battery modules 20 having identifiers ID 1-1, ID 2-2, and ID 3-3 are standby battery modules 20.

The module management units 46 then instruct the battery modules 20 to switch between the interconnection plan, which is seen in FIG. 8A, and the standby interconnection plan, which is seen in FIG. 8B, based on the specific requirements of the battery system 10. That is, the battery modules 20 alternative between the standby interconnection plan and the interconnection plan to balance energy usage to deplete the battery modules 20 that are part of the battery array 12 more evenly. The switching may continue until the battery modules 20 are depleted or until the electrical output 24 no longer requires power.

It is also to be appreciated that the illustrations shown in FIGS. 1, 6, 7A-7B, and 8A-8B illustrate the battery array 12 where all of the battery modules 20 are electrically connected to one another. However, in some examples, including the example shown in FIG. 9, the battery system 10 comprises two or more sub-arrays 120A, 120B, 120C of battery modules 20, where the sub-arrays 120A, 120B, 120C battery modules 20 are connected to one another using the mesh data architecture. In some examples, including the example shown in FIG. 9, the battery system 10 comprises three sub-arrays 120A, 120B, 120C. Each sub-array 120A, 120B, 120C comprises a plurality of battery modules 20 (FIG. 1) that are electrically connected to one another in parallel or series as well an respective electrical output 24. Each sub-array 120A, 120B, 120C is in electronic communication with the remaining sub-arrays 120 by the data connection 60. The data connection 60 transmits and receives data indicating the operating parameters of the battery modules 20 of each sub-array 120A, 120B, 120C.

Referring generally to the figures, the disclosed battery array provides various technical effects and benefits. Specifically, the disclosed battery array is based on a mesh arrangement that enables the battery system to dynamically adjust the interconnections between the battery modules to accommodate unexpected events such as, for example, failure of one or more of the battery modules, depletion of one or more of the battery modules, and requests to change one or more parameters related to the system requirement data during operation of the battery array. Each module management unit that is part of the battery array receives data indicating the operating parameters of the remaining battery modules that are part of the battery array. Accordingly, the module management units may collectively calculate an alternative interconnection plan in response to unexpected events that may occur during operation. It is also to be appreciated that the disclosed battery array utilizes electronic switching to implement the alternative interconnection plan. In contrast, it may not be as simple and easy to implement an alternate interconnection plan with some types of conventional battery systems, as conventional systems may require a user to physically move or change interconnections between the battery modules.

Furthermore, the data mesh architecture does not utilize a centralized battery management unit for providing control to all of the individual battery modules that are part of the battery array. It is to be appreciated that utilizing individual module management units instead of a centralized battery management unit may increase the fault tolerance of the battery array. Specifically, since the mesh data architecture is based on a peer-to-peer network, the module management units may isolate or disable a non-functional battery module from the battery array relatively easily, especially when compared to systems employing a centralized battery management unit. Finally, the battery array includes a modular design, and therefore may be arranged into a variety of configurations. Accordingly, the battery modules that are part of the disclosed battery array may be arranged to fit within standardized pallets as well, which may not be possible with conventional battery systems.

Referring now to FIG. 10, the module management units 46 are implemented on one or more computer devices or systems, such as exemplary computer system 1030. The computer system 1030 includes a processor 1032, a memory 1034, a mass storage memory device 1036, an input/output (I/O) interface 1038, and a Human Machine Interface (HMI) 1040. The computer system 1030 is operatively coupled to one or more external resources 1042 via the network 1026 or I/O interface 1038. External resources may include, but are not limited to, servers, databases, mass storage devices, peripheral devices, cloud-based network services, or any other suitable computer resource that may be used by the computer system 1030.

The processor 1032 includes one or more devices selected from microprocessors, microcontrollers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 1034. Memory 1034 includes a single memory device or a plurality of memory devices including, but not limited to, read-only memory (ROM), random access memory (RAM), volatile memory, non-volatile memory, static random-access memory (SRAM), dynamic random-access memory (DRAM), flash memory, cache memory, or any other device capable of storing information. The mass storage memory device 1036 includes data storage devices such as a hard drive, optical drive, tape drive, volatile or non-volatile solid-state device, or any other device capable of storing information.

The processor 1032 operates under the control of an operating system 1046 that resides in memory 1034. The operating system 1046 manages computer resources so that computer program code embodied as one or more computer software applications, such as an application 1048 residing in memory 1034, may have instructions executed by the processor 1032. In alternative examples, the processor 1032 may execute the application 1048 directly, in which case the operating system 1046 may be omitted. One or more data structures 1049 also reside in memory 1034, and may be used by the processor 1032, operating system 1046, or application 1048 to store or manipulate data.

The I/O interface 1038 provides a machine interface that operatively couples the processor 1032 to other devices and systems, such as the network 1026 or external resource 1042. The application 1048 thereby works cooperatively with the network 1026 or external resource 1042 by communicating via the I/O interface 1038 to provide the various features, functions, applications, processes, or modules comprising examples of the disclosure. The application 1048 also includes program code that is executed by one or more external resources 1042, or otherwise rely on functions or signals provided by other system or network components external to the computer system 1030. Indeed, given the nearly endless hardware and software configurations possible, persons having ordinary skill in the art will understand that examples of the disclosure may include applications that are located externally to the computer system 1030, distributed among multiple computers or other external resources 1042, or provided by computing resources (hardware and software) that are provided as a service over the network 1026, such as a cloud computing service.

The HMI 1040 is operatively coupled to the processor 1032 of computer system 1030 in a known manner to allow a user to interact directly with the computer system 1030. The HMI 1040 may include video or alphanumeric displays, a touch screen, a speaker, and any other suitable audio and visual indicators capable of providing data to the user. The HMI 1040 also includes input devices and controls such as an alphanumeric keyboard, a pointing device, keypads, pushbuttons, control knobs, microphones, etc., capable of accepting commands or input from the user and transmitting the entered input to the processor 1032.

A data store 1044 may reside on the mass storage memory device 1036 and may be used to collect and organize data used by the various systems and modules described herein. The data store 1044 may include data and supporting data structures that store and organize the data. In particular, the data store 1044 may be arranged with any data store organization or structure including, but not limited to, a relational database, a hierarchical database, a network database, or combinations thereof. A database management system in the form of a computer software application executing as instructions on the processor 1032 may be used to access the information or data stored in records of the data store 1044 in response to a query, where a query may be dynamically determined and executed by the operating system 1046, other applications 1048, or one or more modules.

Further, the disclosure comprises examples according to the following clauses:
Clause 1: a battery array comprising a plurality of battery modules each having one or more battery cells, wherein each battery module comprises: a plurality of switching elements configured to switch the one or more battery cells in circuit and out of circuit with the battery array; a memory storing a connection map indicating an identifier associated with each of the plurality of battery modules, a location of one or more electrical outputs of the battery array, and interconnections between each of the plurality of battery modules; and a module management unit coupled to the memory that controls the plurality of switching elements, wherein the module management unit is in electronic communication with remaining battery modules of the battery array based on a data mesh configuration, the module management unit executing instructions to: receive system requirement data for each of the one or more electrical outputs of the battery array, wherein the system requirement data indicates a required voltage, a required current, and a required capacity corresponding to each of the one or more electrical outputs; in response to receiving the system requirement data, calculate an interconnection plan that indicates selected interconnections between the plurality of battery modules for meeting the system requirement data for at least one of the electrical outputs; and instruct the plurality of switching elements to switch the one or more battery cells either in circuit or out of circuit with the battery array based on the interconnection plan.
Clause 2: the battery array of clause 1, wherein the module management unit determines the interconnection plan by: in sequence of priority, calculate a number of series-connected battery modules required to achieve the required voltage indicated by the system requirement data for each of the electrical outputs.
Clause 3: the battery array of any of clauses 1 or 2, wherein the module management unit determines the number of series-connected battery modules by dividing the required voltage by a battery module voltage.
Clause 4: the battery array of any of clauses 1, 2, or 3, wherein the module management unit determines the interconnection plan by: in sequence of priority, calculate a number of parallel-connected battery modules that are required to achieve the required current and the required capacity indicated by the system requirement data for each of the electrical outputs.
Clause 5: the battery array of any of clauses 1, 2, 3, or 4, wherein the module management unit determines the number of parallel-connected battery modules by: divide the required current by a battery module current to determine a first number of battery modules; divide the required capacity by a battery module capacity to determine a second number of battery modules; compare the first number of battery modules with the second number of battery modules to determine a greater value between the first number of battery modules and the second number of battery modules; and select the greater value as the number of parallel-connected battery modules.
Clause 6: the battery array of any of clauses 1, 2, 3, or 4, wherein the module management unit determines the interconnection plan by: select one or more battery modules connected in parallel that are part of the battery array to satisfy the required capacity and the required current for a first electrical output, wherein the number of parallel-connected battery modules are selected.
Clause 7: the battery array of any of clauses 1, 2, 3, 4, 5, or 6, wherein the battery modules of the battery array are arranged into a plurality of columns and a plurality of rows, and wherein an edge battery module, a corner battery module, or both the edge battery module and the corner battery module exist for each row of the plurality of rows of the battery array.
Clause 8: the battery array of any of clauses 1, 2, 3, 4, 5, 6, or 7, wherein the module management unit selects the one or more battery modules connected in parallel by: starting with the first electrical output, select either the edge battery module or the corner battery module for a first row that the first electrical output is located along; and select the one or more battery modules connected in parallel located along the first row that are required to satisfy the required current and the required capacity of the first electrical output.
Clause 9: the battery array of clause 6, wherein the module management unit determines the interconnection plan by: after selecting the one or more battery modules connected in parallel, select one or more battery modules connected in series that are part of the battery array to satisfy the required voltage for the first electrical output, wherein the number of series-connected battery modules are selected.
Clause 10: the battery array of clause 9, wherein the module management unit executes instructions to: after selecting the one or more battery modules connected in parallel and the one or more battery modules connected in series to satisfy the system requirement data for the first electrical output, determine that additional rows of battery modules are available within the battery array; and in response to determining the additional rows of battery modules are available within the battery array, select the one or more battery modules connected in parallel and the one or more battery modules connected in series to satisfy a second electrical output requirement.
Clause 11: the battery array any of clauses 1, 2, 3, 4, 5, 6, 7, 8, 9, or 10, wherein the module management unit executes instructions to: receive a notification indicating a non-functional battery module, wherein the non-functional battery module is switched in circuit with the battery array as part of the interconnection plan; and in response to receiving the notification, calculate an alternate interconnection plan without the non-functional battery module.
Clause 12: the battery array of clause 11, wherein calculating the alternate interconnection plan comprises at least one standby battery module.
Clause 13: the battery array any of clauses 1, 2, 3, 4, 5, 6, 7, 8, 9, 10, 11 or 12, wherein the module management unit executes instructions to: determines at least one standby battery module exists as part of the interconnection plan, where the standby battery module represents an unused battery module that is not interconnected; and in response to determining at least one standby battery module exists as part of the interconnection plan, calculate a standby interconnection plan that employs the at least one standby battery module.
Clause 14: the battery array any of clauses 1, 2, 3, 4, 5, 6, 7, 8, 9, 10, 11, 12, or 13, wherein the module management unit executes instructions to: receive data indicating a plurality of operating parameters from the other battery modules that are part of the battery array.
Clause 15: the battery array of clause 14, wherein the plurality of operating parameters comprise of one or more of the following: a rated voltage, a battery capacity, a state-of-charge, a state-of-health, available series and parallel connections, and fault data.
Clause 16: the battery array any of clauses 1, 2, 3, 4, 5, 6, 7, 8, 9, 10, 11, 12, 13, 14, or 15, wherein the plurality of switching elements are configured pass electrical power through a corresponding battery module, wherein the electrical power is generated by the remaining battery modules of the battery array.
Clause 17: the battery array any of clauses 1, 2, 3, 4, 5, 6, 7, 8, 9, 10, 11, 12, 13, 14, 15, 16, wherein the plurality of switching elements are configured to connect the one or more battery cells in circuit with the battery array based on one of two opposing polarities.
Clause 18: a method of operating a battery array having a plurality of battery modules, the method comprising: receive, by a module management unit, system requirement data indicating a required voltage, a required current, and a required capacity corresponding to one or more electrical outputs of the battery array, wherein each battery module of the battery array comprise a corresponding module management unit and one or more battery cells; in response to receiving the system requirement data, calculating an interconnection plan that indicates selected interconnections between the plurality of battery modules for meeting the system requirement data for at least one of the electrical outputs, wherein a memory of the module management unit stores a connection map indicating an identifier associated with each of the plurality of battery modules, a location of one or more electrical outputs of the battery array, and interconnections between each of the plurality of battery modules; and instructing, by the module management unit, a plurality of switching elements to switch the one or more battery cells either in circuit or out of circuit with the battery array based on the interconnection plan, wherein the module management unit is in electronic communication with remaining battery modules of the battery array based on a data mesh configuration.
Clause 19: the method of clause 18, further comprising: in sequence of priority, calculating a number of series-connected battery modules required to achieve the required voltage indicated by the system requirement data for each of the electrical outputs.
Clause 20: the method of any of clauses 18 or 19, further comprising: determining the number of series-connected battery modules by dividing the required voltage by a battery module voltage.
Clause 21: the method of any of clauses 18, 19, or 20, further comprising determining the interconnection plan by: in sequence of priority, calculating a number of parallel-connected battery modules that are required to achieve the required current and the required capacity indicated by the system requirement data for each of the electrical outputs.
Clause 22: the method of clause 21, further comprising determining the number of parallel-connected battery modules by: dividing the required current by a battery module current to determine a first number of battery modules; dividing the required capacity by a battery module capacity to determine a second number of battery modules; comparing the first number of battery modules with the second number of battery modules to determine a greater value between the first number of battery modules and the second number of battery modules; and selecting the greater value as the number of parallel-connected battery modules.
Clause 23: the method of any of clauses 18, 19, 20, 21, or 22, further comprising determining the interconnection plan by: select one or more battery modules connected in parallel that are part of the battery array to satisfy the required capacity and the required current for a first electrical output, wherein the number of parallel-connected battery modules are selected.
Clause 24: the method of clause 23, wherein the battery modules of the battery array are arranged into a plurality of columns and a plurality of rows, and wherein an edge battery module, a corner battery module, or both the edge battery module and the corner battery module exist for each row of the plurality of rows of the battery array.
Clause 25: the method of clause 24, further comprising selecting the one or more battery modules by: starting with the first electrical output, selecting either the edge battery module or the corner battery module for a first row that the first electrical output is located along; and selecting the one or more battery modules connected in parallel located along the first row that are required to satisfy the required current and the required capacity of the first electrical output.
Clause 26: the method of clause 23, further comprising determining the interconnection plan by: after selecting the one or more battery modules connected in parallel, selecting one or more battery modules connected in series that are part of the battery array to satisfy the required voltage for the first electrical output, wherein the number of series-connected battery modules are selected.
Clause 27: the method of clause 26, further comprising: after selecting the one or more battery modules connected in parallel and the one or more battery modules connected in series to satisfy the system requirement data for the first electrical output, determining that additional rows of battery modules are available within the battery array; and in response to determining the additional rows of battery modules are available within the battery array, selecting the one or more battery modules connected in parallel and the one or more battery modules connected in series to satisfy a second electrical output requirement.

The description of the subject disclosure is merely exemplary in nature and variations that do not depart from the gist of the subject disclosure are intended to be within the scope of the subject disclosure. Such variations are not to be regarded as a departure from the spirit and scope of the subject disclosure.

## Claims

1. A battery array (12) comprising a plurality of battery modules (20) each having one or more battery cells (40), wherein each battery module (20) comprises:
a plurality of switching elements (42) configured to switch the one or more battery cells (40) in circuit and out of circuit with the battery array (12);
a memory (1036) storing a connection map indicating an identifier associated with each of the plurality of battery modules (20), a location of one or more electrical outputs (24) of the battery array (12), and interconnections (22) between each of the plurality of battery modules (20); and
a module management unit (46) coupled to the memory (1036) that controls the plurality of switching elements (42) , wherein the module management unit (46) is in electronic communication with remaining battery modules (20) of the battery array (12) based on a data mesh architecture, the module management unit (46) is configured to execute instructions to:
receive system requirement data for each of the one or more electrical outputs (24) of the battery array (12), wherein the system requirement data indicate a required voltage, a required current, and a required capacity corresponding to each of the one or more electrical outputs (24);
in response to receiving the system requirement data, calculate an interconnection plan that indicates selected interconnections (22) between the plurality of battery modules (20) for meeting the system requirement data for at least one of the electrical outputs; and
instruct the plurality of switching elements (42) to switch the one or more battery cells (40) either in circuit or out of circuit with the battery array (12) based on the interconnection plan.

2. The battery array (12) of claim 1, wherein the module management unit (46) is configured to execute instructions to determine the interconnection plan by:
in sequence of priority, calculating a number of series-connected battery modules (20) required to achieve the required voltage indicated by the system requirement data for each of the electrical outputs (24).

3. The battery array (12) of claim 1 or 2, wherein the module management unit (46) is configured to execute instructions to determine the number of series-connected battery modules (20) by dividing the required voltage by a battery module voltage.

4. The battery array (12) of any of claims 1 to 3, wherein the module management unit (46) is configured to execute instructions to determine the interconnection plan by:
in sequence of priority, calculating a number of parallel-connected battery modules (20) that are required to achieve the required current and the required capacity indicated by the system requirement data for each of the electrical outputs (24).

5. The battery array (12) of any of claims 1 to 4, wherein the module management unit (46) is configured to execute instructions to determine the number of parallel-connected battery modules (20) by:
dividing the required current by a battery module current to determine a first number of battery modules (20);
dividing the required capacity by a battery module capacity to determine a second number of battery modules (20);
comparing the first number of battery modules (20) with the second number of battery modules (20) to determine a greater value between the first number of battery modules (20) and the second number of battery modules (20); and
selecting the greater value as the number of parallel-connected battery modules (20).

6. The battery array (12) of any of claims 1 to 5, wherein the module management unit (46) is configured to execute instructions to determine the interconnection plan by:
selecting one or more battery modules (20) connected in parallel that are part of the battery array (12) to satisfy the required capacity and the required current for a first electrical output (24A), wherein the number of parallel-connected battery modules (20) are selected.

7. The battery array (12) of any of claims 1 to 6, wherein the battery modules (20) of the battery array (12) are arranged into a plurality of columns (30) and a plurality of rows (32), and wherein an edge battery module (20A), a corner battery module (20B), or both the edge battery module (20A) and the corner battery module (20B) exist for each row of the plurality of rows (32) of the battery array (12).

8. The battery array (12) of claim 7, wherein the module management unit (46) is configured to execute instructions to select the one or more battery modules (20) connected in parallel by:
starting with the first electrical output, select either the edge battery module (20A) or the corner battery module (20B) for a first row (32A) that the first electrical output (24A) is located along; and
select the one or more battery modules (20) connected in parallel located along the first row (32A) that are required to satisfy the required current and the required capacity of the first electrical output (24A).

9. The battery array (12) of claim 6, wherein the module management unit (46) is configured to execute instructions to determine the interconnection plan by:
after selecting the one or more battery modules (20) connected in parallel, selecting one or more battery modules (20) connected in series that are part of the battery array (12) to satisfy the required voltage for the first electrical output, wherein the number of series-connected battery modules (20) are selected.

10. The battery array (12) of claim 9, wherein the module management unit (46) is configured to execute instructions to:
after selecting the one or more battery modules (20) connected in parallel and the one or more battery modules (20) connected in series to satisfy the system requirement data for the first electrical output (24A), determine that additional rows (32) of battery modules (20) are available within the battery array (12); and
in response to determining the additional rows (32) of battery modules (20) are available within the battery array (12), select the one or more battery modules (20) connected in parallel and the one or more battery modules (20) connected in series to satisfy a second electrical output requirement (24B).

11. The battery array (12) of any of claims 1 to 10, wherein the module management unit (46) is configured to execute instructions to:
receive a notification indicating a non-functional battery module (20), wherein the non-functional battery module (20) is switched in circuit with the battery array (12) as part of the interconnection plan; and
in response to receiving the notification, calculate an alternate interconnection plan without the non-functional battery module (20); and, optionally,
the alternate interconnection plan comprises at least one standby battery module (20).

12. The battery array (12) of any of claims 1 to 11, wherein the module management unit (46) is configured to execute instructions to:
determine at least one standby battery module (20) exists as part of the interconnection plan, where the standby battery module (20) represents an unused battery module (20) that is not interconnected; and
in response to determining at least one standby battery module (20) exists as part of the interconnection plan, calculate a standby interconnection plan that employs the at least one standby battery module (20).

13. The battery array (12) of any of claims 1 to 12, wherein the module management unit (46) is configured to execute instructions to:
receive data indicating a plurality of operating parameters from the other battery modules (20) that are part of the battery array (12); and, optionally,
the plurality of operating parameters comprise of one or more of the following: a rated voltage, a battery capacity, a state-of-charge, a state-of-health, available series and parallel connections, and fault data.

14. The battery array (12) of any of claims 1 to 13, wherein the plurality of switching elements (42) are configured:
to pass electrical power through a corresponding battery module (20), wherein the electrical power is generated by the remaining battery modules (20) of the battery array (12); and/or
to connect the one or more battery cells (40) in circuit with the battery array (12) based on one of two opposing polarities.

15. A method (200) of operating a battery array (12) having a plurality of battery modules (20), the method (200) comprising:
receive, by a module management unit (46), system requirement data indicating a required voltage, a required current, and a required capacity corresponding to one or more electrical outputs (24) of the battery array (12), wherein each battery module (20) of the battery array (12) comprise a corresponding module management unit (46) and one or more battery cells (40);
in response to receiving the system requirement data, calculating an interconnection plan that indicates selected interconnections (22) between the plurality of battery modules (20) for meeting the system requirement data for at least one of the electrical outputs (24), wherein a memory (1036) of the module management unit (46) stores a connection map indicating an identifier associated with each of the plurality of battery modules (20), a location of one or more electrical outputs (24) of the battery array (12), and interconnections (22) between each of the plurality of battery modules (20); and
instructing, by the module management unit (46), a plurality of switching elements (42) to switch the one or more battery cells (40) either in circuit or out of circuit with the battery array (12) based on the interconnection plan, wherein the module management unit (46) is in electronic communication with remaining battery modules (20) of the battery array (12) based on a data mesh architecture.
